(19) Europäisches Patentamt
European Patent Office
Office européen des brevets

(11) **EP 2 210 693 B1**

(12) **EUROPÄISCHE PATENTSCHRIFT**

(45) Veröffentlichungstag und Bekanntmachung des
Hinweises auf die Patenterteilung:
**20.07.2011 Patentblatt 2011/29**

(51) Int Cl.:
***B23F 23/10*** *(2006.01)*     ***B23F 5/04*** *(2006.01)*

(21) Anmeldenummer: **09151385.3**

(22) Anmeldetag: **27.01.2009**

(54) **Verfahren zur Kompensation einer bei der Bearbeitung eines Werkstücks auftretenden Schwingbewegung des Werkstücks bei einer Verzahnmaschine**

Method for compensating for an oscillation of a workpiece in a gear cutting machine arising during the processing of a workpiece

Procédé de compensation d'un mouvement d'oscillation d'une pièce usinée survenant lors du traitement de la pièce usinée dans une machine à tailler les engrenages

(84) Benannte Vertragsstaaten:
**CH DE IT LI**

(43) Veröffentlichungstag der Anmeldung:
**28.07.2010 Patentblatt 2010/30**

(73) Patentinhaber: **Siemens Aktiengesellschaft**
**80333 München (DE)**

(72) Erfinder: **Glück, Winfried**
**91085, Weisendorf (DE)**

(56) Entgegenhaltungen:
**GB-A- 863 338**     **GB-A- 1 131 342**
**US-A- 3 203 313**

EP 2 210 693 B1

**Beschreibung**

Die Erfindung betrifft ein Verfahren zur Kompensation einer bei der Bearbeitung eines Werkstücks auftretenden Schwingbewegung des Werkstücks bei einer Verzahnmaschine. Weiterhin betrifft die Erfindung eine Verzahnmaschine mit einer entsprechenden Regeleinrichtung.

Mit Hilfe von Verzahnmaschinen werden Zahnräder hergestellt. Die Bearbeitung zur Herstellung eines Zahnrads durch die Verzahnmaschine kann dabei z.B. in Form von Wälzschleifen, Wälzfräsen, Honen oder Koronieren vorliegen. Die Bearbeitung des Werkstücks erfolgt dabei mittels eines Werkzeugs, das z.B. beim Bearbeitungsvorgang Wälzschleifen in Form einer Schnecke ausgebildet ist. Beim Bearbeitungsvorgang Wälzschleifen ist die Schnecke mit einer entsprechend rauen Oberfläche versehen und das Werkstück wird durch ein Zahnrad gebildet, dessen Zähne mittels der Schnecke geschliffen werden. Beim Bearbeitungsvorgang Wälzfräsen ist das Werkzeug mit Schneiden versehen.

Zur Bearbeitung des Werkstücks wird das Werkstück in eine Werkstückhaltevorrichtung eingespannt. Die Werkstückhaltevorrichtung wird drehend von einer Welle (Motorwelle) eines Motors angetrieben. Durch die am Werkstück durch den Bearbeitungsvorgang angreifenden Kräfte wird das System bestehend aus Werkstück, Werkstückhaltevorrichtung und Welle in eine Schwingbewegung versetzt und schwingt während der Bearbeitung des Werkstücks in Bezug auf eine Ruhelage hin und her. Ursache hierfür sind die Biegeelastizität der Welle und endliche Lagersteifigkeiten der Lager, in denen die Welle gelagert wird.

Durch die Schwingbewegung des Werkstücks entsteht eine Auslenkung des Werkstücks in Bezug auf eine Ruhelage des Werkstücks, wobei die Ruhelage, die Lage des Werkstücks ist, die das in die Werkstückhaltevorrichung eingespannte Werkstück einnimmt, wenn keine Bearbeitung des Werkstücks erfolgt.

Durch die Auslenkung wird die Position zwischen Werkzeug und Werkstück während der Bearbeitung ständig verändert, was sich ungünstig auf die Oberflächenqualität des Werkstücks auswirkt. Es entstehen durch die Auslenkung bedingt Vertiefungen und Erhöhungen auf der Oberfläche des Werkstücks.

Es ist dabei bekannt zur Reduzierung der Auslenkung die Werkstückhaltevorrichtung und Welle möglichst steif auszubilden und im Maschinengestell anzuordnen.

Aus Dokument GB863338 ist ebenfalls bekannt eine durch die nichtlineare Antriebskinematik auftretende Verzerrung der Werkzeugbewegung durch Überlagerung einer Kompensationsbewegung auszugleichen.

Es ist Aufgabe der Erfindung eine hohe Oberflächenqualität eines Werkstücks bei der Bearbeitung des Werkstücks durch eine Verzahnmaschine zu ermöglichen.

Diese Aufgabe wird gelöst durch ein Verfahren zur Kompensation einer bei der Bearbeitung eines Werkstücks auftretenden Schwingbewegung des Werkstücks bei einer verzahnmaschine gemäß Anspruch 1.

Weiterhin wird diese Aufgabe gelöst durch eine Verzahnmaschine gemäß Anspruch 8.

Vorteilhafte Ausbildungen der Erfindung ergeben sich aus den abhängigen Ansprüchen.

Es erweist sich als vorteilhaft, wenn zur Veränderung der Drehgeschwindigkeit des Werkstücks die Auslenkung ermittelt wird, wobei aus der Auslenkung ein Drehgeschwindigkeitskorrekturwert ermittelt wird, wobei ein korrigierter Drehgeschwindigkeitsollwert ermittelt wird indem ein Drehgeschwindigkeitssollwert anhand des Drehgeschwindigkeitskorrekturwerts verändert wird, wobei der korrigierte Drehgeschwindigkeitssollwert als Regelsollwert zur Regelung der Drehgeschwindigkeit des Werkstücks verwendet wird. Durch diese Maßnahme kann die entstehende Auslegung des Werkstücks auf besonders einfache Art und Weise ausgeglichen werden.

Ferner erweist es sich als vorteilhaft, wenn die Auslenkung mittels einer Beschleunigungsmesseinrichtung ermittelt wird, da dann die Auslenkung besonders kostengünstig und praktikabel bezüglich der Maschinenhandhabung ermittelt werden kann.

Ferner erweist es sich als vorteilhaft, wenn die Auslenkung mittels einer Lagemesseinrichtung ermittelt wird, da mit Hilfe einer Lagemesseinrichtung die Auslenkung besonders genau ermittelt werden kann.

Weiterhin erweist es sich als vorteilhaft, wenn die Lagemesseinrichtung einen Sensor, der ein magnetisches Wechselfeld zur Erfassung der Breite eines Luftspaltes erzeugt, aufweist.

Weiterhin erweist es sich als vorteilhaft, wenn die Lagemesseinrichtung eine mit Markierungen versehene Maßverkörperung und zwei auf gegenüberliegenden Seiten der Maßverkörperung angeordnete Markierungserfassungseinrichtungen zur Erfassung der Markierungen aufweist. Mit Hilfe einer solchen Lagemesseinrichtung kann die Auslenkung besonders genau ermittelt werden.

Weiterhin sein an dieser Stelle angemerkt, dass die Verzahnmaschine z.B. als Wälzschleifmaschine oder als Wälzfräsmaschine ausgebildet sein kann. Selbstverständlich kann die Erfindung aber auch bei anderen Arten von Verzahnmaschinen verwendet werden, mit denen z.B. Bearbeitungsvorgänge wie Honen oder Koronieren durchgeführt werden.

Ein Ausführungsbeispiel der Erfindung ist in der Zeichnung dargestellt und wird im Folgenden näher erläutert. Dabei zeigen:

FIG 1    eine Schnittansicht einer erfindungsgemäßen Ver- zahnmaschine,

FIG 2     ein Werkstück, das von einem Werkzeug der Bear- beitungsmaschine bearbeitet wird,

FIG 3     eine schematisierte Darstellung des Wirkprinzips der Erfindung,

FIG 4     ein Antriebstrang zum drehenden Antrieb des Werk- stücks,

FIG 5     ein Ausführungsbeispiel einer Lagemesseinrichtung und

FIG 6     ein weiteres Ausführungsbeispiel einer Lagemess- einrichtung.

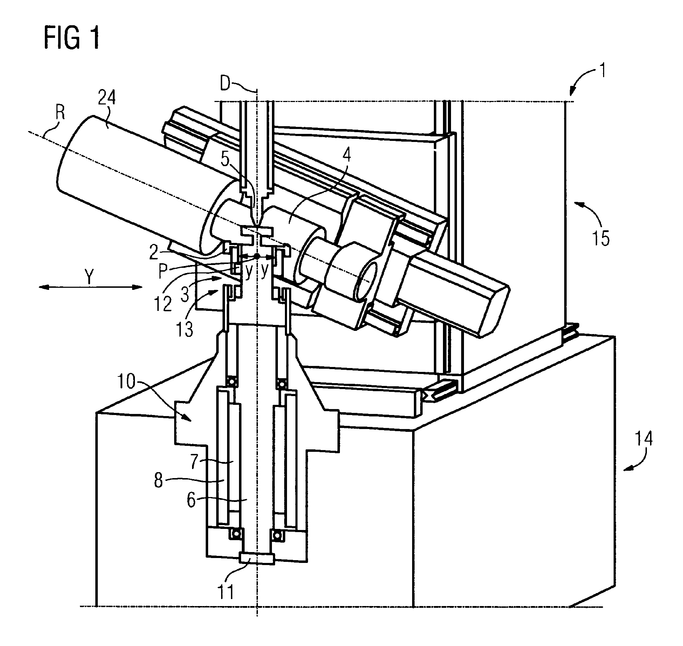

In FIG 1 ist in Form einer schematisierten Darstellung eine erfindungsgemäße Verzahnmaschine 1 in Form einer Schnittansicht dargestellt. Im Rahmen des Ausführungsbeispiels ist die Verzahnmaschine 1 dabei als Wälzschleifmaschine, die ein Wälzschleifen durchführt, ausgebildet. Die Verzahnmaschine 1 weist einen Motor 24 auf, der drehend ein Werkzeug 4, das im Rahmen des Ausführungsbeispiels in Form einer Schnecke vorliegt, antreibt. Bei der Bearbeitung eines Werkstücks 2 dreht sich das Werkzeug 4, d.h. im Rahmen des Ausführungsbeispiels die Schnecke. Im Rahmen des Ausführungsbeispiels weist die Schnecke 4 eine raue Oberfläche auf, mit Hilfe derer das zu bearbeitende Werkstück geschliffen werden kann. Das Werkzeug 4 kann zur Änderung seiner Orientierung und Lage mittels einer Verfahrvorrichtung 15 im Raum gedreht und translatorisch im Raum verfahren werden. Die Verfahrvorrichtung 15 ist auf einem örtlich ruhenden Maschinengestell 14 angeordnet.

Ein Motor 10 treibt das Werkstück 2, das mit Hilfe des Werkzeugs 4 bearbeitet werden soll, drehend an. Das Werkstück 2 dreht sich bei der Bearbeitung des Werkstücks 2. Der Motor 10 weist einen Stator 8 und einen drehfest mit einer Welle 6 verbundenen Rotor 7 auf. Die Welle 6 ist drehfest mit einer Werkstückhaltevorrichtung 3 verbunden. In die Werkstückhaltevorrichtung 3 ist das Werkstück 2 eingespannt. Über den Rotor 7, die Welle 6 und die Werkstückhaltevorrichtung 3 wird das Werkstück 2, das im Rahmen des Ausführungsbeispiels als Zahnrad ausgebildet ist, drehend angetrieben. Ein Dorn 5, der von oben in die Werkstückhaltevorrichtung 3 eingreift, sorgt für eine mechanische Stabilisierung der Werkstückhaltevorrichtung 3. Der Rotor 7, die Welle 6, die Werkstückhaltevorrichtung 3 und das Zahnrad 2 drehen sich bei der Bearbeitung des Werkstücks 2 um die Drehachse D. Die Drehgeschwindigkeit des Werkstücks 2 wird mit Hilfe eines an der Welle 6, angeordneten Drehgebers 11 ermittelt.

Durch den Bearbeitungsvorgang treten am Werkstück 2 hohe Bearbeitungskräfte auf, die ein Verbiegen der Welle 6 und der Werkstückhaltevorrichtung 3 in Y-Richtung bewirken. Es entsteht somit durch die Bearbeitungskräfte bedingt, welche vom Werkzeug auf das Werkstück einwirken, eine Schwingbewegung des Werkstücks 2, der Werkstückhaltevorrichtung 3 und der Welle 6 in Y-Richtung.

Die Schwingbewegung erfolgt dabei während der Bearbeitung des Werkstücks in Y-Richtung mit einer von der jeweiligen Verzahnmaschine abhängigen Schwingungsfrequenz $f_s$ aus einer gedachten Ruhelage P hin und her. Das Werkstück wird infolge der Schwingbewegung um eine Auslenkung y aus der Ruhelage P heraus nach rechts ausgelenkt und anschließend um eine Auslenkung y aus der Ruhelage P nach links ausgelenkt gemäß der Darstellung in FIG 1. Durch die Schwingbewegung entsteht solchermaßen eine Auslenkung y des Drehpunkts um den sich das Werkstück dreht.

Durch die Auslenkung y des Werkstücks 2 wird während der Bearbeitung des Werkstücks die Position des Werkstücks in Bezug auf das Werkzeug verändert. Die Auslenkung y verursacht solchermaßen eine Veränderung der Berührstelle von Werkstück und Werkzeug während der Bearbeitung des Werkstücks.

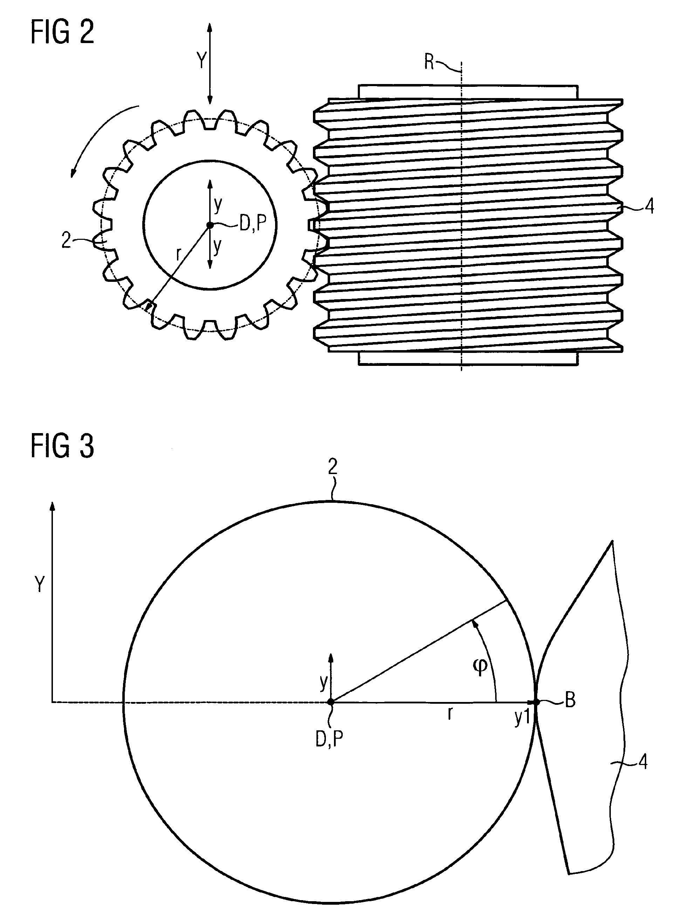

In FIG 2 ist der Bearbeitungsvorgang des im Rahmen des Ausführungsbeispiels als Zahnrad ausgebildeten Werkstücks 2, das mittels des Werkzeugs 4, das im Rahmen des Ausführungsbeispiels als Schnecke ausgebildet ist, vorliegt, in Form einer schematisierten Darstellung dargestellt. Die Schnecke 4 greift bei der Bearbeitung in die Zahnzwischenräume des Zahnrads 2 ein. Die Schnecke 4 weist, zur Schleifbearbeitung des Zahnrads 2, eine raue Oberfläche auf. Bei der Bearbeitung des Zahnrads 2 dreht sich das Zahnrad permanent um die Drehachse D und die Schnecke 4 um die Drehachse R. Das Zahnrad 2 weist dabei einen Zahnradwirkradius r auf, mit dem später z.B. beim Einsatz des Zahnrads in einem Getriebe, die Getriebeübersetzung bestimmt wird. Durch die Bearbeitungskräfte bedingt entsteht eine Schwingbewegung des Werkstücks in Y-Richtung, was eine Auslenkung y des Zahnrads 2 aus der Ruhelage P heraus zur Folge hat. Die Ruhelage P ist dabei die Lage, die das in die Werkstückhaltevorrichtung eingespannte Zahnrad einnimmt, wenn keine Bearbeitungskräfte an ihm angreifen.

Infolge der Auslenkung y wird die Position des Werkstücks bei der Bearbeitung in Bezug auf das Werkzeug verändert. Somit verursacht die Auslenkung eine Veränderung an einer einzelnen oder mehreren Berührstellen von Werkstück und Werkzeug, was sich ungünstig auf die Oberflächenqualität des Zahnrads auswirkt. Bei handelsüblich bekannten Verzahnmaschinen werden dabei bei der Bearbeitung das Werkzeug und das Werkstück jeweils mit einer konstanten Drehgeschwindigkeit angetrieben.

In FIG 3 ist in Form einer schematisierten Darstellung das Wirkprinzip der Erfindung dargestellt. Dabei ist das Werkstück 2 vereinfacht als Kreisscheibe mit dem Radius r dargestellt. Das Zahnrad 2 wird mit dem Werkzeug 4 bearbeitet, wobei das Werkstück 2 und das Werkzeug 4 sich bei der Bearbeitung zu dem gerade dargestellten Zeitpunkt in einem Berührpunkt B berühren. Das Werkstück 2 dreht sich um die Drehachse D. Wird im Rahmen des Ausführungsbeispiels, infolge der Schwingbewegung gerade das Werkstück 2 um die Auslenkung y in Richtung der eingezeichneten Koordinate Y gemäß FIG 3 nach oben ausgelenkt, so wird erfindungsgemäß zum Ausgleich der Auslenkung y das Werkstück 2 zusätzlich zur ohnehin vorhandenen permanenten Drehung um einen zusätzlichen Winkels gedreht. Hierdurch wird erfindungsgemäß erreicht, dass keine durch die Auslenkung y verursachte Veränderung der Berührstelle B von Werkstück und Werkzeug auftritt. Bei dem erfindungsgemäßen Verfahren wird dabei ausgenutzt, dass die Auslenkung y im Vergleich zum Radius r sehr klein ist. Die Auslenkung y bewegt sich in der Regel im Mikrometerbereich, während der Radius r sich im Allgemeinen im Millimeter- oder Zentimeterbereich bewegt. Für die Lage yl des Berührpunkts B in Y-Richtung in einem Bereich um den Berührpunkts B gilt:

$$yl = y + \varphi \cdot r \quad \texttt{mit r>>y} \quad (1)$$

Die Auslenkung y wird somit durch die zusätzliche Drehung des Werkstücks 2 um den Winkel $\varphi$ ausgeglichen, so dass sich die Berührstelle B infolge der Auslenkung y nicht verändert, d.h. y1=0 ist. Die zusätzliche Drehung um den Winkel $\varphi$ wird erreicht, indem erfindungsgemäß die Drehgeschwindigkeit des Werkstücks bei der Bearbeitung des Werkstücks verändert wird und zwar so dass die durch die Schwingbewegung in Bezug auf das Werkstück entstehende Auslenkung y des Werkstücks ausgeglichen wird. Der Winkel $\varphi$ ergibt sich somit zu:

$$\varphi = -\frac{1}{r} \cdot y \quad (2)$$

Erreicht wird dies, wie schon gesagt, indem die Drehgeschwindigkeit, mit der das Werkstück gedreht wird, verändert wird, wobei die Drehgeschwindigkeit somit je nach der gerade vorhandenen Ausrichtung der Auslenkung y (nach links oder rechts gemäß FIG 1 von der Ruhelage P aus) kurzzeitig verringert oder erhöht wird, so dass der zusätzliche Winkel $\varphi$ zum Drehwinkel, der sich bei einer konstanten Drehgeschwindigkeit ergeben würde, subtrahiert oder addiert wird.

Die Drehgeschwindigkeit des Werkstücks wird bei der Bearbeitung des Werkstücks derart verändert, dass eine durch die Schwingbewegung in Bezug auf das Werkstück entstehende Auslenkung des Werkstücks durch die Drehbewegung des Werkstücks ausgeglichen wird, wobei das Ausgleichen der Auslenkung so erfolgt, dass keine durch die Auslenkung verursachte Veränderung der Berührstelle von Werkstück und Werkzeug auftritt.

Es sei angemerkt, dass selbstverständlich durch die permanente Drehbewegung des Werkstücks und des Werkzeugs sich die Berührstelle von Werkstück und Werkzeug ständig verändert. Entscheidend ist aber für die Oberflächenqualität des Werkstücks, dass keine durch die Auslenkung verursachte Veränderung der Berührstelle von Werkstück und Werkzeug auftritt, sondern nur durch die Drehbewegung von Werkstück und Werkzeug.

Die Drehgeschwindigkeit des Werkstücks wird bei der Bearbeitung des Werkstücks somit derart angepasst, dass eine durch die Schwingbewegung im Bezug auf das Werkzeug entstehende Auslenkung des Werkstücks durch die Drehbewegung des Werkstücks ausgeglichen wird.

Zur Ermittelung der Auslenkung y des Werkstücks weist die erfindungsgemäße Verzahnmaschine 1, gemäß FIG 1, eine Lagemesseinrichtung 13 auf.

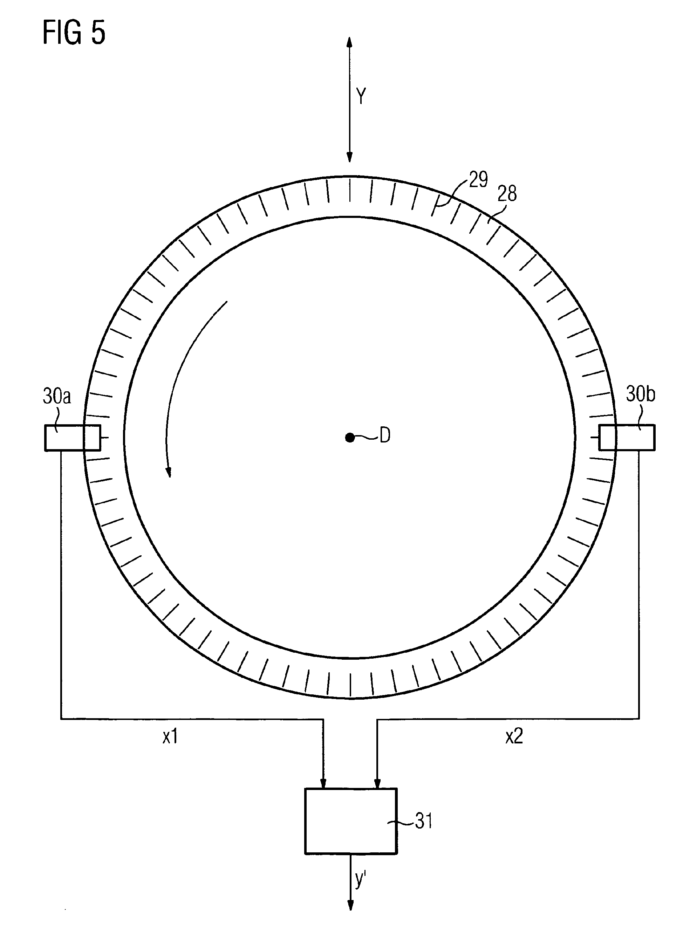

Eine Ausführungsform der Lagemesseinrichtung 13 ist in FIG 5 in Form einer schematisierten Darstellung dargestellt, wobei eine solche Lagemesseinrichtung zur Messung der translatorischen Lage eines sich drehenden Elements Stand der Technik ist. Es ist jedoch nicht bekannt eine solche Lagemesseinrichtung zur Ermittelung der Auslenkung eines Werkstücks bei einer Verzahnmaschine zu verwenden. Die Lagemesseinrichtung weist eine Maßverkörperung auf, die im Rahmen des Ausführungsbeispiels aus einem Ring 28 auf dem in äquidistanten Abständen Markierungen angeordnet sind, besteht. Der Übersichtlichkeit halber ist in FIG 5 nur eine Markierung 29 mit einem Bezugszeichen versehen. Durch die Öffnung der Maßverkörperung wird z.B. die Werkstückhaltevorrichtung 3 oder ein Teil der Werkstückhaltevorrichtung 3 hindurchgeführt und mit der Maßverkörperung drehfest verbunden. Alternativ könnte z.B. aber auch der in FIG 1 obere Teil der Welle 6 durch die Öffnung der Maßverkörperung hindurchgeführt werden und mit der Maßverkörperung drehfest verbunden werden. Die Maßverkörperung dreht sich um die Drehachse D. Die Lagemesseinrichtung weist zwei auf gegenüberliegenden Seiten der Maßverkörperung ruhend angeordnete Markierungserfassungseinrichtungen 30a und 30b zur Erfassung der Markierungen, wenn diese unter den Markierungserfassungseinrichtungen vorbeilaufen, auf. Die Markierungen erzeugen Markierungssignale x1 und x2, die von einer Auswerteeinheit 31 ausgewertet werden. Bei einer Auslenkung y' der Maßverkörperung in Y-Richtung werden die Markierungssignale verändert, weil zusätzliche oder weniger Markierungen erfasst werden, als infolge der reinen Drehbewegung der Maßverkörperung erfasst werden würden. Die Auswerteeinheit ermittelt anhand der Markierungssignale x1 und x2 die Auslenkung y'.

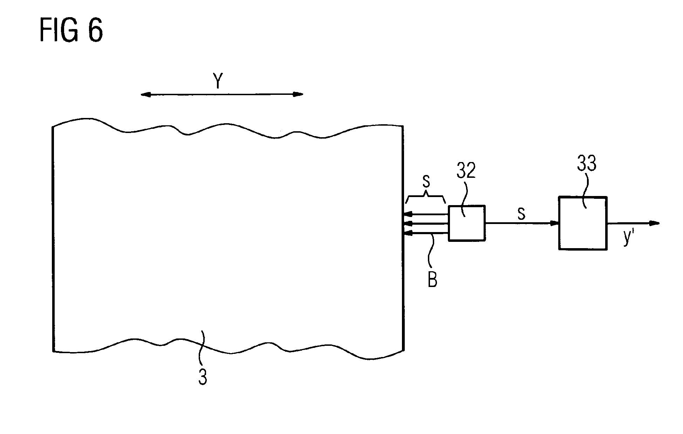

Eine weitere mögliche Ausführungsform der Lagemesseinrichtung 13 ist in FIG 6 in Form einer schematisierten Darstellung dargestellt, wobei eine solche Lagemesseinrichtung zur Messung der translatorischen Lage eines sich drehenden Elements ebenfalls Stand der Technik ist. Es ist jedoch ebenfalls nicht bekannt eine solche Lagemesseinrichtung zur Ermittelung der Auslenkung eines Werkstücks bei einer Verzahnmaschine zu verwenden. Die Lagemesseinrichtung 13 weist einen ruhend angeordneten Sensor 32 auf, der ein magnetisches Wechselfeld B zur Erfassung der Breite s in Y-Richtung eines zwischen dem drehenden Element und dem Sensor 32 angeordneten Luftspalts erzeugt, wobei das Element z.B. in Form der Werkstückhaltevorrichtung 3 ausgebildet sein kann. Der Sensor 32 gibt die gemessene Breite s an eine Auswerteeinheit 33 aus. Die Auswerteeinheit 33 ermittelt anhand der gemessenen Breite s die Auslenkung y'. In FIG 1 würde im Rahmend dieser Ausführungsform die Lagemesseinrichtung 13 nur aus den rechtsseitig von der Werkstückhaltevorrichtung 3 dargestellten angeordneten Elementen der Lagemesseinrichtung 13 bestehen.

Weiterhin kann die Auslenkung aber auch mittels einer Beschleunigungsmesseinrichtung 12, die in FIG 1 gestrichelt gezeichnet angedeutet ist, ermittelt werden. Da sich die Schwingungsfrequenz $f_s$ der Schwingbewegung des Werkstücks stark von der Drehfrequenz $f_w$ des Werkstücks unterscheidet, kann mit Hilfe eines geeigneten Filters leicht die durch die Auslenkung y verursachte Beschleunigung herausgefiltert werden und das solchermaßen gefilterte Signal zwei Mal hintereinander integriert werden, um aus der Beschleunigung die Auslenkung zu ermitteln.

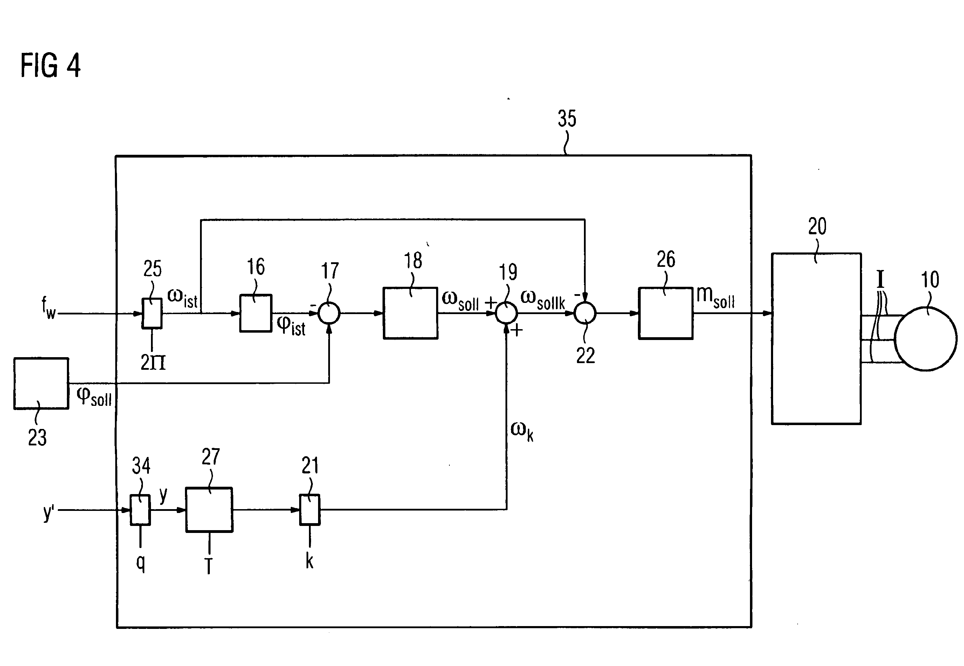

In FIG 4 ist der Antriebstrang zum drehenden Antreiben des Werkstücks 3 dargestellt. Eine Regeleinrichtung 35 weist dabei die zur Regelung der Drehgeschwindigkeit des Werkstücks 3 wesentlichen Regelkomponenten auf. Der Drehgeber 11 ermittelt die Drehfrequenz $f_w$ des Werkstücks 2 mit der sich das Werkstück 2 um die Drehachse D dreht. Die Drehfrequenz $f_w$ wird mittels eines Multiplizierers 25 mit einem Faktor 2n multipliziert und solchermaßen ausgangsseitig im Rahmen des Ausführungsbeispiels die Drehgeschwindigkeit $\omega_{ist}$ ermittelt. Die Drehgeschwindigkeit $\omega_{ist}$ wird anschließend mit Hilfe eines Integrierers 16 einmal nach der Zeit t integriert und solchermaßen ausgangsseitig ein Drehlageistwert $\varphi_{ist}$ ermittelt. Von einer Steuereinrichtung 23 wird ein Drehlagesollwert $\varphi_{soll}$ erzeugt. Mit Hilfe eines Subtrahierers 17 wird die Differenz $\varphi_{ist}$) von Drehlagesollwert $\varphi_{soll}$ und Drehlageistwert $\varphi_{ist}$ ermittelt und als Eingangsgröße einem Lageregler 18, der im Rahmen des Ausführungsbeispiels als P-Regler (Proportionalregler) ausgebildet ist, zugeführt. Der Lageregler 18 gibt ausgangsseitig einen Drehgeschwindigkeitssollwert $\omega_{soll}$ aus.

Bei einer handelsüblichen Regeleinrichtung zur Regelung der Drehgeschwindigkeit des Werkstücks bei einer handelsüblichen Verzahnmaschine wird der Drehgeschwindigkeitssollwert $\omega_{soll}$ direkt als Eingangsgröße dem Subtrahierer 22 zugeführt und somit die Drehgeschwindigkeit $\omega_{ist}$ des Werkstücks immer auf den konstanten Drehgeschwindigkeitssollwert $\omega_{soll}$, der in diesem Fall die Regelsollgröße bildet, geregelt. Die Drehgeschwindigkeit des Werkstücks ist somit bei der Bearbeitung des Werkstücks bei einer handelsüblichen Verzahnmaschine konstant.

Hier setzt nun die Erfindung an. Anstatt den Drehgeschwindigkeitssollwert $\omega_{soll}$ direkt als Eingangsgröße dem Subtrahierer 22 zuzuführen, wird erfindungsgemäß ein korrigierter Drehgeschwindigkeitssollwert $\omega_{sollk}$ dem Subtrahierer 23 als Eingangsgröße zugeführt. Der korrigierter Drehgeschwindigkeitssollwert $\omega_{sollk}$ wird ermittelt, indem der Drehgeschwindikeitssollwert $\omega_{soll}$ anhand eines Drehgeschwindigkeitskorrekturwerts $\omega_k$ verändert wird, wobei im Rahmen des Ausführungsbeispiels die Veränderung des Drehgeschwindikeitssollwerts $\omega_{soll}$ erfolgt, indem zu dem Drehgeschwindigkeitssollwert $\omega_{soll}$ der Drehgeschwindigkeitskorrekturwert $\omega_k$ mittels des Addierers 19 addiert wird und solchermaßen ausgangsseitig am Addierer 19 der korrigierte Drehgeschwindigkeitssollwert $_{\omega sollk}$ ausgegeben wird.

Der Drehgeschwindigkeitskorrekturwert $\omega_k$ wird ermittelt, indem zunächst ausgangsseitig aus von der Lagemesseinrichtung 13 am Ort der Lagemesseinrichtung gemessenen Auslenkung y' die Auslenkung y des Werkstücks ermittelt wird. Dies ist dann notwendig wenn der Einbauort der Messeinrichtung (Lagemesseinrichtung, Beschleunigungsmesseinrichtung) zur Messung der Auslenkung y des Werkstücks im stärken Maße von dem Ort des Werkstücks abweicht. Im Rahmen des Ausführungsbeispiels ist gemäß FIG 1 die Lagemesseinrichtung 13 unterhalb des Werkstücks 2 angeordnet, so dass die gemessene Auslenkung y' nicht genau mit der Auslenkung y des Werkstücks 2 übereinstimmt. Zur Ermittelung der Auslenkung y des Werkstücks aus der gemessenen Auslenkung y' wird die gemessenen Auslenkung y' mit einem Faktor q, mittels des Multiplizierers 34, multipliziert. Der Faktor q kann mathematisch oder auch empirisch durch Messung ermittelt werden. Im Idealfall, d.h. wenn die Messeinrichtung zur Messung der Auslenkung y des Werkstücks in unmittelbarer Nähe des Werkstücks angeordnet ist stimmt die gemessene Auslenkung y' mit der Auslenkung y des Werkstücks überein und der Faktor q hat einen Wert von "1".

Anschließend wird zur Ermittelung des Drehgeschwindigkeitskorrekturwerts $\omega_k$ die Auslenkung y des Werkstücks, mittels eines Verzögerers 27, zeitlich um eine Zeitdauer T verzögert und mittels eines Multiplizierers 21 mit einem Faktor k multipliziert. Der Multiplizierer 21 gibt ausgangsseitig den Drehgeschwindigkeitskorrekturwert $\omega_k$ aus.

Der Faktor k ergibt sich dabei zu,

$$k = f_0 \cdot \frac{1}{r} \cdot 2\pi \qquad (3)$$

wobei $f_0$ die Eigenfrequenz des Systems bestehend aus Werkstück, Werkstückhaltevorrichtung und Welle und r der Werkstückradius ist, d.h. bei einem Zahnrad der Zahnradwirkradius ist. Die Eigenfrequenz $f_0$ des Systems kann empirisch, z.B. mittels Messung, durch z.B. eine impulsförmige Anregung des Systems ermittelt werden. Der Werkstückradius r kann z.B. mittels einer Messung ermittelt werden. Die Verzögerungszeit T dient zum Ausgleich der messtechnischen Verzögerung sowie der einzelnen Verzögerungen innerhalb der Regelung und der Antriebseinrichtung 20 und des Motors 10. Die Verzögerungszeit T kann ebenfalls empirisch ermittelt werden indem z.B. die Verzögerungszeit T Schritt für Schritt erhöht wird bis ein Optimum der Kompensation der Schwingbewegung des Werkstücks erreicht ist.

Die Verzögerungszeit T kann aber auch rechnerisch ermittelt werden. Die Verzögerungszeit T unterliegt dabei der nachfolgend beschriebenen Deterministik. Entscheidend zur Bestimmung der erforderlichen Verzögerungszeit T ist die Phasenverschiebung $\Phi$(zeitlicher Bezug) zwischen der durch die Schwingung bedingten Auslenkung y und der erfindungsgemäßen Reaktion des Werkstücks in Form der zusätzlichen Drehung um den Winkel $\varphi$. Bei der Auslenkung y handelt es sich um einen harmonischen Vorgang. Eine exakte Kompensation einer solchen harmonischen Bewegung wird durch eine Phasenverschiebung um $\Pi$ erreicht, wobei da es sich um einen zeitlichen Verzug handelt sich eine Phasenverschiebung um $-\Pi$ ergibt. Diese Phasenverschiebung $\Phi$ muss bei der Kompensation bei der Eigenfrequenz $f_0$ eingehalten werden.

Berücksichtigt man noch weiterhin die bereits erwähnte zeitliche Verzögerung $T_v$, die sich aus der Summe der messtechnischen Verzögerung sowie der einzelnen zeitlichen Verzögerungen innerhalb der Regelung und der Antriebseinrichtung 20 und des Motors 10 ergibt, so ergibt sich folgender Zusammenhang zur Bestimmung der Verzögerungszeit T:

$$\Phi = -2\pi f_0 (T + T_v) \qquad (4)$$

Aufgelöst nach der Verzögerungszeit T ergibt sich:

$$T = \frac{\Phi}{-2\pi f_0} - T_v \qquad (5)$$

Mit

$$\Phi = -\pi \qquad (6)$$

ergibt sich somit die Verzögerungszeit T zu:

$$T = \frac{1}{2 f_0} - T_v \qquad (7)$$

Der korrigierte Drehgeschwindigkeitssollwert $\omega_{sollk}$ wird als Regelsollwert zur Regelung der Drehgeschwindigkeit $\omega_{ist}$ des Werkstücks verwendet. Hierzu wird der korrigierte Drehgeschwindigkeitssollwert $\omega_{sollk}$ als Eingangsgröße dem Subtrahierer 22 zugeführt und mittels des Subtrahierers 22 vom korrigierten Drehgeschwindigkeitssollwert $\omega_{sollk}$

die Drehgeschwindigkeit $\omega_{ist}$ subtrahiert und die solchermaßen bestimmte Differenz als Eingangsgröße einem Drehzahlregler 26, der im Rahmen des Ausführungsbeispiels als PI-Regler (Proportional-Integral-Regler) ausgebildet ist, zugeführt. Der Drehzahlregler 26 dient zur Regelung der Drehgeschwindigkeit $\omega_{ist}$ des Werkstücks. Der Drehzahlregler 26 gibt ausgangsseitig einen Momentensollwert $m_{soll}$ an eine Antriebseinrichtung 20 aus. Die Antriebseinrichtung 20 besteht im Wesentlichen aus einem Stromrichter mit zugehöriger Signalverarbeitungs- und Ansteuerelektronik, wobei die Antriebseinrichtung 20 entsprechend dem Momentensollwert $m_{soll}$ ausgangsseitig zur Ansteuerung des Motors 10 Ströme I erzeugt. Die Drehgeschwindigkeit $\omega_{ist}$ wird dabei entsprechend dem korrigierten Drehgeschwindigkeitssollwert $\omega_{sollk}$, der als Regelsollwert zur Regelung der Drehgeschwindigkeit $\omega_{ist}$ des Werkstücks verwendet wird, geregelt. Die Drehgeschwindigkeit $\omega_{ist}$ des Werkstücks wird solchermaßen mittels des Drehgeschwindigkeitskorrekturwerts $\omega_k$ bei jedem Umlauf des Werkstücks entsprechend der Auslenkung y derart verändert, dass die durch die Schwingbewegung in Bezug auf das Werkzeug entstehende Auslenkung y des Werkstücks durch die Drehbewegung des Werkstücks ausgeglichen wird.

**Patentansprüche**

1. Verfahren zur Kompensation einer bei der Bearbeitung eines Werkstücks (2) auftretenden Schwingbewegung des Werkstücks (2) bei einer Verzahnmaschine (1), wobei die Bearbeitung des Werkstücks (2) durch ein Werkzeug (4) erfolgt, wobei die Schwingbewegung des Werkstücks (2) in Y-Richtung durch Bearbeitungskräfte bedingt, welche vom Werkzeug (4) auf das Werkstück (2) einwirken, entsteht, wobei sich das Werkstück (2) bei der Bearbeitung dreht, wobei die Drehgeschwindigkeit ($\omega_{ist}$) des Werkstücks (2) bei der Bearbeitung des Werkstücks (2) derart verändert wird, dass eine durch die Schwingbewegung des Werkstücks (2) im Bezug auf das Werkzeug (4) entstehende Auslenkung des Werkstücks (2) in y-Richtung durch die Drehbewegung des Werkstücks (2) ausgeglichen wird.

2. Verfahren nach Anspruch 1,
   **dadurch gekennzeichnet, dass** zur Veränderung der Drehgeschwindigkeit ($\omega_{ist}$) des Werkstücks (2) die Auslenkung (y) ermittelt wird, wobei aus der Auslenkung (y) ein Drehgeschwindigkeitskorrekturwert ($\omega_k$) ermittelt wird, wobei ein korrigierter Drehgeschwindigkeitssollwert ($\omega_{sollk}$) ermittelt wird indem ein Drehgeschwindigkeitssollwert ($\omega_{soll}$) anhand des Drehgeschwindigkeitskorrekturwerts ($\omega_k$) verändert wird, wobei der korrigierte Drehgeschwindigkeitssollwert ($\omega_{soll}$) als Regelsollwert zur Regelung der Drehgeschwindigkeit ($\omega_{ist}$) des Werkstücks (2) verwendet wird.

3. Verfahren nach einem der vorhergehenden Ansprüche, **dadurch gekennzeichnet, dass** die Auslenkung (y) mittels eines Beschleunigungsmesseinrichtung (12) ermittelt wird.

4. Verfahren nach Anspruch 1 oder 2,
   **dadurch gekennzeichnet, dass** die Auslenkung mittels einer Lagemesseinrichtung (13) ermittelt wird.

5. Verfahren nach Anspruch 4,
   **dadurch gekennzeichnet, dass** die Lagemesseinrichtung einen Sensor (32), der ein magnetisches Wechselfeld (B) zur Erfassung der Breite (s) eines Luftspaltes erzeugt, aufweist.

6. Verfahren nach Anspruch 4,
   **dadurch gekennzeichnet, dass** die Lagemesseinrichtung eine mit Markierungen (29) versehene Maßverkörperung (28,29) und zwei auf gegenüberliegenden Seiten der Maßverkörperung (28.29) angeordnete Markierungserfassungseinrichtungen (30a,30b) zur Erfassung der Markierungen (29) aufweist.

7. Verfahren nach einem der vorhergehenden Ansprüche,
   **dadurch gekennzeichnet, dass** die Verzahnmaschine (1) als Wälzschleifmaschine oder als Wälzfräsmaschine ausgebildet ist.

8. Verzahnmaschine, wobei die Verzahnmaschine ein Werkzeug (4) aufweist, wobei die Verzahnmaschine (1) derart ausgebildet ist, dass von der Verzahnmaschine (1) das werkstück (2) gedreht wird, wobei durch Bearbeitungskräfte bedingt, die vom Werkzeug (4) auf das Werkstück (2) einwirken, eine Schwingbewegung des Werkstücks (2) in Y-Richtung ensteht, wobei die Verzahnmaschine (1) eine Regeleinrichtung (35) aufweist, die derart ausgebildet ist, dass die Drehgeschwindigkeit ($\omega_{ist}$) des Werkstücks (2) bei der Bearbeitung des Werkstücks (2) derart verändert wird, dass eine durch die Schwingbewegung des Werkstücks (2) in Bezug auf das Werkzeug (4) entstehende Auslenkung des Werkstücks (2) in Y-Richtung durch die Drehbewegung des Werkstücks (2) ausgeglichen wird.

**EP 2 210 693 B1**

## Claims

1. Method for compensating an oscillating movement of a workpiece (2) occurring during the machining of the latter on a gear-cutting machine (1), the machining of the workpiece (2) taking place by means of a tool (4), the oscillating movement of the workpiece (2) in the Y-direction arising due to machining forces which act upon the workpiece (2) from the tool (4), the workpiece (2) rotating during machining, the rotational speed ($\omega_{act}$) of the workpiece (2) being varied during the machining with the workpiece (2), in such a way that a deflection of the workpiece (2) in the Y-direction, arising with respect to the tool (4) as a result of the oscillating movement of the workpiece (2), is compensated by the rotational movement of the workpiece (2).

2. Method according to Claim 1, **characterized in that**, to vary the rotational speed ($\omega_{act}$) of the workpiece (2), the deflection (y) is determined, a rotational-speed correction value ($\omega_k$) being determined from the deflection (y), a corrected rotational-speed desired value ($\omega_{sdesk}$) being determined **in that** a rotational-speed desired value ($\omega_{sdes}$) is varied on the basis of the rotational-speed correction value ($w_k$), the corrected rotational-speed desired value ($\omega_{sdes}$) being used as a regulating desired value for regulating the rotational speed ($\omega_{act}$) of the workpiece (2).

3. Method according to one of the preceding claims, **characterized in that** the deflection (y) is determined by means of an accelerometer device (12).

4. Method according to Claim 1 or 2, **characterized in that** the deflection is determined by means of a position measuring device (13).

5. Method according to Claim 4, **characterized in that** the position measuring device (13) has a sensor (32) which generates a magnetic alternating field (B) for detecting the width (s) of an air gap.

6. Method according to Claim 4, **characterized in that** the position measuring device has a measurement standard (28, 29) provided with markings (29) and two marking detection devices (30a, 30b), arranged on opposite sides of the measurement standard (28, 29), for detecting the markings (29).

7. Method according to one of the preceding claims, **characterized in that** the gear-cutting machine (1) is designed as a hob-grinding machine or as a hob-milling machine.

8. Gear-cutting machine, the gear-cutting machine having a tool (4), the gear-cutting machine (1) being designed in such a way that the workpiece (2) is rotated by the gear-cutting machine (1), an oscillating movement of the workpiece (2) in the Y-direction arising due to machining forces which act upon the workpiece (2) from the tool (4), the gear-cutting machine (1) having a regulating device (35) which is designed in such a way that the rotational speed ($\omega_{act}$) of the workpiece (2) is varied during the machining of the workpiece (2), in such a way that a deflection of the workpiece (2) in the Y-direction, arising with respect to the tool (4) as a result of the oscillating movement of the workpiece (2), is compensated by the rotational movement of the workpiece (2).

## Revendications

1. Procédé de compensation d'un mouvement d'oscillation d'une pièce ( 2 ) survenant lors de l'usinage d'une pièce ( 2 ) dans une machine ( 1 ) à tailler des engrenages, l'usinage de la pièce ( 2 ) s'effectuant par un outil ( 4 ), le mouvement d'oscillation de la pièce ( 2 ) dans la direction Y étant créé en raison de forces d'usinage qui agissent de l'outil ( 4 ) sur la pièce ( 2 ), la pièce ( 2 ) tournant lors de l'usinage, la vitesse ($\omega_{ist}$) de rotation de la pièce ( 2 ) lors de l'usinage de la pièce ( 2 ) étant modifiée, de manière à compenser par le mouvement de rotation de la pièce ( 2 ) une excursion de la pièce ( 2 ) dans la direction Y se créant par le mouvement de rotation de la pièce par rapport à l'outil ( 4 ).

2. Procédé suivant la revendication 1,
**caractérisé en ce que**, pour modifier la vitesse ($\omega_{ist}$) de rotation de la pièce ( 2 ), on détermine l'excursion ( y ) en déterminant à partir de l'excursion ( y ) une valeur ($\omega_k$) de correction de la vitesse de rotation, une valeur ($\omega_{sollk}$) de consigne de vitesse de rotation corrigée étant déterminée en modifiant une valeur ($\omega_{soll}$) de consigne de vitesse de rotation au moyen de la valeur ($\omega_k$) de correction de la vitesse de rotation, la valeur ($\omega_{soll}$) de consigne de vitesse de rotation corrigée étant utilisée comme valeur de consigne de régulation pour la régulation de la vitesse ($\omega_{ist}$) de rotation de la pièce ( 2 ).

**3.** Procédé suivant l'une des revendications précédentes,
   **caractérisé en ce que** l'on détermine l'excursion ( y ) au moyen d'un dispositif ( 12 ) de mesure de l'accélération.

**4.** Procédé suivant la revendication 1 ou 2,
   **caractérisé en ce qu'**on détermine l'excursion au moyen d'un dispositif ( 13 ) de mesure de position.

**5.** Procédé suivant la revendication 4,
   **caractérisé en ce que** le dispositif de mesure de position est un capteur ( 32 ), qui a un champ ( B ) magnétique alternatif, pour la détection de la largeur d'un entrefer.

**6.** Procédé suivant la revendication 4,
   **caractérisé en ce que** le dispositif de mesure de position a une mesure ( 28, 29 ) matérialisée munie de repères ( 29 ) et, pour la détection des repères ( 29 ), deux dispositifs ( 30a, 30b ) de détection de repères disposés sur des côtés opposés de la mesure ( 28, 29 ) matérialisée.

**7.** Procédé suivant l'une des revendications précédentes,
   **caractérisé en ce que** la machine ( 1 ) à tailler les engrenages est constituée en machine à rectifier ou en machine à affûter les fraises mères.

**8.** Machine à tailler les engrenages, la machine à tailler les engrenages ayant un outil ( 4 ), la machine ( 1 ) à tailler les engrenages étant constituée de manière à ce que la pièce ( 2 ) soit mise en rotation par la machine ( 1 ) à tailler les engrenages, dans laquelle, en raison des forces d'usinage qui agissent de l'outil ( 4 ) sur la pièce ( 2 ), il se crée dans la direction Y un mouvement d'oscillation de la pièce ( 2 ), la machine ( 1 ) à tailler les engrenages ayant un dispositif ( 35 ) de régulation qui est tel que la vitesse ( $\omega_{ist}$ ) de rotation de la pièce ( 2 ) est modifiée lors de l'usinage de la pièce ( 2 ), de manière à compenser par le mouvement de rotation de la pièce ( 2 ) une excursion de la pièce ( 2 ) dans la direction Y se créant par le mouvement de rotation de la pièce par rapport à l'outil ( 4 ).

FIG 1

FIG 2

FIG 3

FIG 4

FIG 5

FIG 6

**EP 2 210 693 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 863338 A